Europäisches Patentamt

European Patent Office

Office européen des brevets

(19)

(11) EP 0 592 300 B1

## (12) FASCICULE DE BREVET EUROPEEN

(45) Date de publication et mention
de la délivrance du brevet:
**09.06.1999 Bulletin 1999/23**

(51) Int Cl.$^6$: **G01N 27/90**

(21) Numéro de dépôt: **93402442.3**

(22) Date de dépôt: **05.10.1993**

(54) **Procédé de traitement de signaux recueillis par un capteur ponctuel absolu à courants de Foucault**

Verfahren zur Verarbeitung von Signalen, aufgenommen von einer absoluten, punktuellen Wirbelstromsonde

Method for processing the signals captured by a punctual, absolute Eddy-current sensor

(84) Etats contractants désignés:
**BE DE GB IT**

(30) Priorité: **07.10.1992 FR 9211893**

(43) Date de publication de la demande:
**13.04.1994 Bulletin 1994/15**

(73) Titulaire: **COMMISSARIAT A L'ENERGIE ATOMIQUE**
**75015 Paris (FR)**

(72) Inventeurs:
- **Attaoui, Pascale**
  **F-92290 Chatenay-Malabry (FR)**
- **Benoist, Bruno**
  **F-94240 L'Hay les Roses (FR)**
- **Besnard, Rémy**
  **F-78114 Magny les Hameaux (FR)**
- **David, Bernard**
  **F-91190 Gif sur Yvette (FR)**

(74) Mandataire: **Dubois-Chabert, Guy et al**
**c/o BREVATOME**
**25, rue de Ponthieu**
**75008 Paris (FR)**

(56) Documents cités:
**EP-A- 0 411 874         GB-A- 2 192 993**

- **IEEE TRANSACTIONS ON MAGNETICS vol. 20, no. 5 , Septembre 1984 , NEW YORK pages 1986 - 1988 R.O. MCCRAY, D.W. OLIVER, K.H. SILVERSTEIN, AND J.D. YOUNG 'eddy current imaging'**
- **ICASSP 86 PROCEEDINGS 7 Avril 1986 , TOKYO pages 1441 - 1444 P. SIMARD, P. GAILLARD 'automatic classification and recognition of defects in an eddy current non destructive testing'**
- **IEEE TRANSACTIONS ON MAGNETICS vol. 27, no. 6 , Novembre 1991 , NEW YORK pages 4416 - 4437 XP257358 RIADH ZORGATI, BERNARD DUCHENE, DOMINIQUE LESSELIER, AND FRANCIS PONS 'Eddy Current Testing of Anomalies in Conductive Materials, Part 1: Qualitative Imaging via Diffraction Tomography Techniques.'**

**Description**

Domaine technique

La présente invention concerne un procédé de traitement de signaux recueillis par un capteur ponctuel absolu à courants de Foucault se déplaçant le long de la paroi interne d'un tube, ou appareil de forme cylindrique, en matériau conducteur.

L'invention trouve une application dans le contrôle des tubes de générateurs de vapeur.

Etat de la technique antérieure

Il est connu d'effectuer le contrôle de la surface de pièces en matériau conducteur de l'électricité en utilisant des capteurs à courants de Foucault. Le signal délivré par de tels capteurs permet en effet de donner une information concernant l'état de la surface et la présence éventuelle de défauts, en déplaçant le capteur devant cette surface. A titre d'exemple, un contrôle de ce type est effectué périodiquement dans les tubes des échangeurs de chaleur ou des générateurs de vapeur équipant les centrales nucléaires.

Quelle que soit l'application envisagée, une telle technique de contrôle consiste à effectuer un balayage aussi complet que possible de la surface à contrôler et à observer au moyen d'un système de lecture directe, les variations du signal délivré par le capteur afin d'en déduire l'état de la surface contrôlée.

Si l'on prend l'exemple des centrales nucléaires à eau sous pression, des barreaux contenant de l'uranium sont placés dans une cuve remplie d'eau ; l'eau s'échauffe au contact des barreaux, puis transmet sa chaleur dans un échangeur de chaleur où elle est refroidie, et est renvoyée dans la cuve par une pompe ; elle circule ainsi en circuit fermé. L'échangeur de chaleur sert de générateur de vapeur. L'eau d'un second circuit vient s'y vaporiser au contact des tubes chauds du circuit primaire ; la vapeur entraîne une turbine, couplée à un alternateur, puis, après condensation, l'eau obtenue est renvoyée au générateur de vapeur. Enfin, pour condenser la vapeur, on fait circuler de l'eau froide dans un troisième circuit. Une telle centrale comprend ainsi trois circuits indépendants : le circuit primaire qui transmet la chaleur du réacteur, le circuit secondaire "eau-vapeur" et le circuit de refroidissement.

Chaque générateur de vapeur, haut d'une vingtaine de mètres, comporte en partie basse une plaque horizontale percée d'un grand nombre de trous ; sous cette plaque une paroi verticale sépare les compartiments d'arrivée et de sortie de l'eau primaire. Au-dessus de la plaque sont placés plusieurs milliers de tubes en U renversés, dont les extrémités sont soudées dans les trous de la plaque horizontale.

C'est au contact de ces tubes, parcourus par l'eau chaude du circuit primaire, que l'eau du circuit secondaire se vaporise. En transmettant sa chaleur, l'eau du circuit primaire est refroidie : 320°C à l'entrée, 280°C à la sortie.

La surveillance d'un tel générateur de vapeur consiste à déceler tout défaut susceptible de réaliser la communication entre le circuit d'eau primaire et le circuit d'eau secondaire au niveau de ces tubes. Des contrôles sont donc effectués périodiquement par la méthode des courants de Foucault.

A mesure que le parc nucléaire vieillit, le contrôle de ces tubes pose de nouveaux problèmes. En effet, de nouveaux défauts apparaissent, en particulier au niveau des plaques tubulaires, des plaques entretoises ou des entrées de cintres. Les mesures effectuées sur les tubes proviennent d'une sonde à courants de Foucault. Une telle sonde est composée d'un bobinage électrique inséré dans un pont de mesure. Les variations d'impédance de cette bobine lors de son déplacement dans le tube provoquent un déséquilibre du pont qui constitue l'information utile. Les performances des sondes axiales classiques vis-à-vis de la détection de ces nouveaux défauts sont insuffisantes et ont conduit à l'élaboration d'une nouvelle sonde à capteur ponctuel absolu. Ce nouveau type de prise de données permet de détecter des défauts plus petits et selon des orientations différentes, en particulier des défauts circonférentiels dans les transitions de dudgeonnage. L'information utile est donc contenue dans le signal acquis lors du quadrillage de la surface interne du tube par la sonde. La représentation est faite sous forme de cartographies de chacune des composantes du signal dans le plan complexe.

Une demande de brevet français numéro 81 17312 du 16 septembre 1981 décrit un procédé et un dispositif pour contrôler la surface d'une pièce en matériau conducteur de l'électricité, au moyen d'un capteur à courants de Foucault délivrant un signal représentatif de l'état de cette surface. Ce procédé consiste à :

- effectuer avec le capteur un balayage selon un ordre donné de zones de mesure élémentaires définies à la surface de la pièce ;
- enregistrer les valeurs échantillonnés du signal délivré par le capteur pour chacune des zones de mesure élémentaires ; et
- restituer des signaux obtenus à partir d'une ou plusieurs valeurs échantillonnées correspondant à des zones voisines de la surface, dans un ordre quelconque souhaité.

Le procédé décrit dans cette demande permet d'obtenir une cartographie de points qui donne une vision tridimensionnelle de la pièce contrôlée, développée selon une génératrice, qui permet de réaliser un diagnostic visuel. Mais, celui-ci est très difficile à formuler ; en effet, aucun outil d'analyse de défauts n'existe.

Mais, les images obtenues par ce procédé sont le plus souvent perturbées par un bruit de fond dû aux variations d'entrefer de la sonde lors notamment d'une ovalisation du tube, d'une excentration de la sonde ou encore un défaut de laminage. Pour éviter ce bruit de fond, deux alternatives sont possibles :

- améliorer les sondes utilisées ;
- ou traiter le signal en sortie des sondes usuelles.

L'invention se propose d'utiliser une sonde usuelle et de traiter son signal de sortie. Elle a pour objet de "mettre à plat" l'image en éliminant le bruit de fond sans altérer les informations utiles contenues dans l'image, de manière à permettre l'analyse d'un éventuel défaut.

De plus, dans les dispositifs de l'art connu, on exploitait l'une des deux voies, correspondant à la projection du signal sur l'axe Y du plan d'impédance. En effet, le procédé de prise de mesure et d'étalonnage aligne les signaux du bruit de fond géométrique sur l'horizontale (axe X du plan d'impédance) rendant les projections sur cet axe trop perturbées pour fournir une cartographie utilisable.

Le perte d'information relative à cette cartographie entraîne, entre autre handicap, une impossibilité de calculer la phase du signal et donc la profondeur d'un défaut éventuel.

L'invention a pour objet de délivrer une information relative à toutes les caractéristiques d'un tel défaut.

Exposé de L'invention

L'invention propose, à cet effet, un procédé de traitement de signaux recueillis par un capteur ponctuel absolu à courants de Foucault se déplaçant le long de la surface interne d'un tube en matériau conducteur et délivrant un signal représentatif de l'état de cette surface interne, ledit procédé comprenant une étape de balayage de cette surface selon un ordre donné de zones de mesure élémentaires et d'enregistrement des valeurs échantillonnées du signal délivré par le capteur pour chacune de ces zones, ce qui permet d'obtenir une image tridimensionnelle représentative de la surface,caréctérisé en ce qu'il comprend également :

- une étape de définition de surfaces élémentaires, chacune étant le produit de deux fonctions de base definies respectivement selon la direction longitudinale et selon la direction circonférentielle du tube,
- une étape de construction d'une surface ce bruit de fond sur l'ensemble de l'image à l'aide desdites surfaces élémentaires,
- une étape de soustraction de cette surface de bruit de fond à l'image,
- une étape d'interprétation d'un éventuel défaut.

Avantageusement, le capteur ponctuel absolu à courants de Foucault comprend un bobinage ponctuel effectuant une mesure absolue selon un mouvement hélicoïdal à l'intérieur du tube.

Avantageusement, pour obtenir une information concernant toutes les caractéristiques d'un éventuel défaut, le procédé de l'invention comprend en outre une étape de décomposition de l'image s'apparentant à une décomposition en série de Fourier afin de déterminer Les composantes les plus représentatives d'un point de vue énergétique, avec une étape préalable de définition de surfaces élémentaires.

Avantageusement, les fonctions de base sont des fonctions sinusoïdales.

Avantageusement, on effectue une itération des étapes de décomposition de l'image, de construction de la surface de bruit de fond et de soustraction de cette surface jusqu'à élimination du bruit de fond.

Avantageusement, pour obtenir une information concernant toutes les caractéristiques d'un éventuel défaut, le procédé de l'invention comprend une étape préalable de détection d'une fenêtre contenant un défaut. De plus, dans l'étape de définition des surfaces élémentaires, on définit une première base de surfaces $g_{i,j}$ définies par morceaux sur le même domaine que l'image privée de la fenêtre de défaut, et une seconde base de surfaces $h_{i,j}$ définies sur tout le domaine de l'image.

Avantageusement, après détection de la fenêtre de défaut, on effectue un prétraitement de dégauchissement, pour rendre équivalentes la première et la dernière colonne de l'image, dans lequel on effectue la soustraction d'une droite joignant les points extrêmes de l'image.

Le procédé de l'invention à également pour objet de s'affranchir du signal de dudgeonnage afin de fournir une cartographie "mise à plat" où seuls subsisteront les défauts à caractériser.

Le procédé de l'invention comporte ainsi une étape de prétraitement de suppression du signal de dudgeonnage pendant laquelle on extrait plusieurs lignes longitudinales de l'image en dehors de la fenêtre de défaut, on calcule la valeur moyenne, on génère la surface correspondante, on soustrait cette surface de l'image.

Les difficultés de mise en oeuvre du procédé de l'invention ont essentiellement résidé dans le choix de la base de fonctions et surtout dans la mise au point des prétraitements permettant d'obtenir une méthode fiable dans tous les cas de figures. Les exemples traités et la mise au point ont été effectués sur des fichiers réels (acquisition sur site ou sur maquette).

L'intérêt majeur d'un tel procédé est d'améliorer considérablement le rapport signal/bruit de l'image avant de procéder à l'analyse des défauts.

Brève description des dessins

- La figure 1 illustre le déplacement du capteur à courants de Foucault utilisé dans le procédé de l'invention,
- la figure 2 illustre plusieurs causes du bruit de fond qui existe sur le signal en sortie du capteur à courants de Foucault,
- la figure 3 illustre un organigramme de fonctionnement du procédé de l'invention,
- la figure 4 illustre un tube dudgeonné,
- les figures 5 et 6 illustrent respectivement une cartographie avant traitement et après traitement selon le procédé de l'invention,
- les figures 7A à 7C illustrent la phase de squelettisation de défauts.

Exposé détaillé d'un mode de réalisation

Dans la suite de la description, on considérera à titre d'exemple non limitatif une application du procédé de l'invention au contrôle de tubes d'un générateur de vapeur. Mais il existe, bien entendu, d'autres applications tout aussi possibles dans le domaine du contrôle d'appareils de forme cylindrique en matériau conducteur.

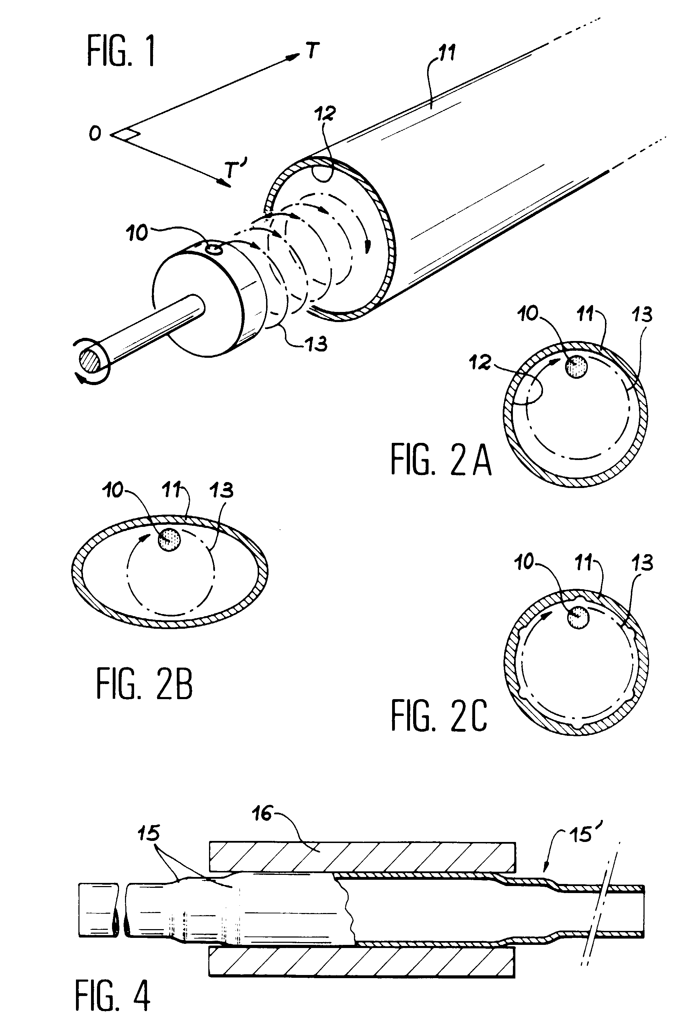

Comme représenté sur la figure 1, le capteur à courants de Foucault utilisé comprend une sonde ponctuelle absolue 10. Cette sonde comporte une bobine dont l'axe est perpendiculaire à la surface interne 12 d'un tube 11. Elle effectue un balayage 13 de l'ensemble de cette surface en suivant un mouvement hélicoïdal. Dans une telle sonde 10, toute variation à l'intérieur de la paroi du tube 11 en matériau conducteur (changement de dimension, variation de conductivité) modifie l'intensité ou le parcours des courants de Foucault et par conséquent l'impédance de la bobine.

Ainsi, du fait de ce balayage 13, il y a découpage de la surface interne 12 du tube 11 en un certain nombre de zones de mesure élémentaires séparées par un certain pas d'acquisition. Dans le cas d'une surface repérée par deux coordonnées OT et OT', comme l'illustre la figure 1, ces zones forment par exemple un quadrillage de la surface dont la finesse dépend de la taille de l'échantillonnage. Ce quadrillage conduit à associer à la surface examinée un tableau de valeurs échantillonnées, enregistrées lors du déplacement de la sonde 10 en face de cette surface 12. Ainsi, si la sonde 10 se déplace selon un trajet 13, le tableau est rempli ligne par ligne selon ce chemin. En d'autres termes, à chaque case du tableau sont associées les coordonnées t et t' de la sonde 10 et la valeur échantillonnée du signal qu'il délivre dans cette position, le sens de remplissage des cases étant imposé par le chemin suivi par la sonde. Le balayage de la surface par la sonde s'accompagne donc d'une acquisition des données que constituent les valeurs échantillonnées du signal délivré par la sonde et enregistrées lors du déplacement de cette dernière.

On peut réaliser une représentation de ces données par une cartographie ou image à trois dimensions du signal. Mais une telle cartographie obtenue grâce au balayage du tube au moyen de la sonde est très perturbée par un bruit de fond qui comprend des composantes basses fréquences dues à des variations de nature géométrique, et aucun outil d'analyse de défaut n'existe à présent.

Un tel bruit de fond peut avoir plusieurs causes et notamment :

- un déplacement 13 excentré de la sonde 10 par rapport à la périphérie du tube 11, comme représenté sur la figure 2A,
- un tube 11 ovalisé comme représenté sur la figure 2B, l'ovalisation pouvant être observée lors de l'usinage des tubes ou suite à des contraintes de fonctionnement,
- un tube 11 laminé au pas de pélerin (étirage du tube avec un outil à six dents), comme représenté sur la figure 2C.

Le procédé de l'invention se propose d'améliorer le rapport signal/bruit de l'image en retranchant de l'image les composantes basses fréquences caractéristiques du bruit de fond. Pour ce faire, on va considérer l'image comme une somme de surfaces élémentaires et lui soustraire toutes les composantes caractéristiques du bruit de fond.

La mise au point de ce procédé passe par le choix d'une base de fonctions. Pour cela il faut prendre en compte l'origine physique du bruit de fond qui perturbe l'image. Les variations d'entrefer (distance capteur-surface) sont périodiques selon la circonférence du tube et génèrent des oscillations de type sinusoidal. La base de surfaces élémentaires est donc construite à partir des fonctions sinusoidales unidimensionnelles aussi bien pour la direction circonférentielle que longitudinale. Cependant, selon cette dernière direction la périodicité est imposée, ce qui peut engendrer des effets de bord. Pour les éviter, on applique un prétraitement de "dégauchissement" qui permet de rendre équivalentes la première et la dernière colonne de l'image.

En réalité, la surface que l'on cherche à décomposer ne constitue pas un domaine continu car on isole une fenêtre de défaut contenue dans l'image. L'information inhérente à la fenêtre du défaut ne doit pas apparaître dans le calcul des coefficients de projection qui ne doivent refléter que les composantes du bruit de fond. La surface de travail est donc l'image privée de la fenêtre de défaut.

Plusieurs bases de fonctions sont alors nécessaires :

- une base de fonctions $g_{i,j}$ définies par morceaux sur le même domaine que l'image privée de la fenêtre de défaut. C'est à partir de ces fonctions que l'on calcule les coefficients de projection pour chaque composante,
- une base de fonctions $h_{i,j}$ définies sur tout le domaine (continu) de l'image. Ces fonctions permettent de reconstruire le bruit de fond sur toute l'image.

Considérons les notations suivantes :

| | |
|---|---|
| $X(t,t')$: | image de départ où t et t' représentent les coordonnées des points et $X(t,t')$ l'amplitude en ces coordonnées. |
| $g_{i,j}(t,t')$: | fonctions bidimensionnelles représentant les surfaces sinusoïdales élémentaires définies sur l'image privée de la fenêtre. |
| $h_{i,j}(t,t')$: | fonctions bidimensionnelles représentant les surfaces sinusoïdales élémentaires définies sur toute l'image. |
| $a_{i,j}$: | coefficients de projection entre l'image $X(t,t')$ et la surface de base $g_{i,j}$. |

L'ensemble des traitements du procédé de l'invention sous-entend une première phase de détection de la fenêtre de défaut, puis à partir des points de la cartographie restants, il s'agit de reconstruire la surface de bruit sur l'ensemble de l'image. Les surfaces de base utilisées sont définies par les produits de fonctions sinusoïdales unidimensionnelles. Pour cela, on procède à une décomposition de l'image s'apparentant à une décomposition en série de Fourier afin de déterminer les composantes les plus représentatives d'un point de vue énergétique, et la surface de bruit finale reconstruite est la somme des surfaces de base pondérées par les coefficients de Fourier correspondants. Le traitement de signal de l'invention considère l'image comme une somme pondérée de surfaces élémentaires ; il détermine les coefficients de pondération pour les différentes surfaces élémentaires et obtient une surface de bruit qui est soustraite de l'ensemble de l'image de départ. Un prétraitement de dégauchissage est préalablement réalisé sur le signal brut.

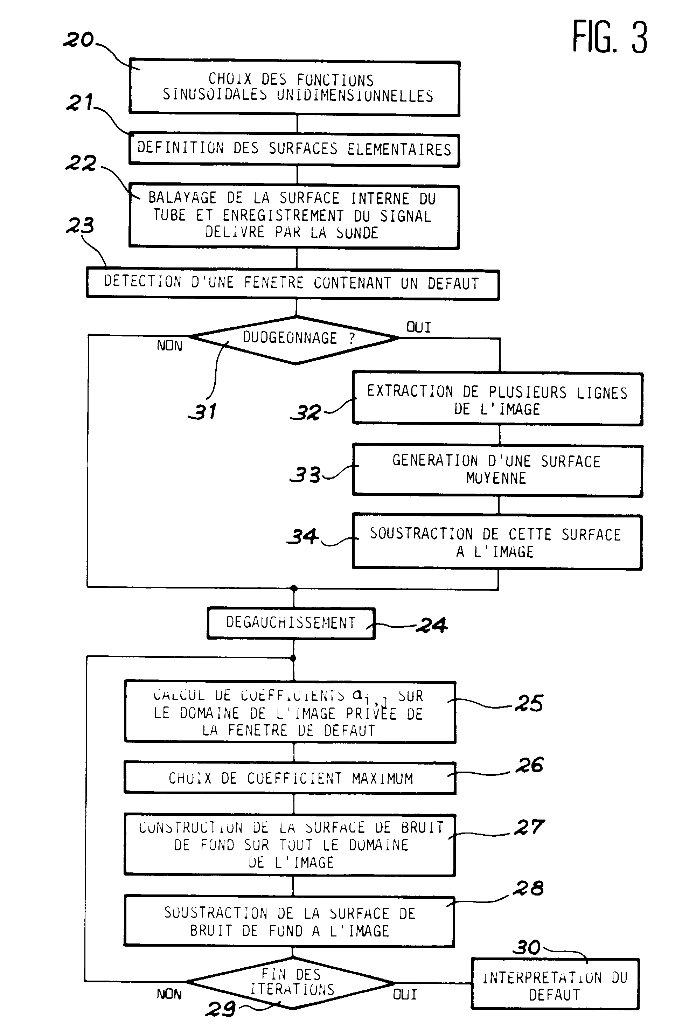

L'algorithme du procédé de l'invention, représenté sur la figure 3, comprend donc, après étalonnage et alignement de la sonde 10 :

- une étape 20 de choix de ces fonctions sinusoïdales unidimensionnelles de base,
- une étape 21 de définition des surfaces élémentaires,
- une étape 22 de balayage de la surface interne 12 du tube 11 et d'enregistrement du signal délivré par la sonde 10,
- une étape 23 de détection d'une fenêtre contenant un défaut,
- une étape 24 de dégauchissement, ce dégauchissement étant un traitement préalable rendant équivalentes la première et la dernière colonnes de l'image. On calcule pour chaque ligne de la cartographie, la droite passant par les deux points de ses extrémités, et on soustrait ensuite cette droite à la ligne correspondante,
- une étape 25 de calcul des coefficients $a_{i,j}$ pour chaque i et j . Ces coefficients sont la projection de toute la surface $X(t,t')$ privée de la fenêtre de défaut sur les surfaces élémentaires

$$a_{i,j}=<X,g_{i,j}>= \int X(t,t').g_{i,j}(t,t').dt.dt'$$

Il s'agit, à un coefficient près, d'une décomposition en série de Fourier. On peut parler d'une décomposition s'apparentant à une décomposition en série de Fourier.

- une étape 26 de choix du coefficient maximum $a_{k,l}=max(a_{i,j})$,
- une étape 27 de construction de la surface de bruit de fond sur toute l'image à partir de l'information disponible en dehors de la fenêtre de défaut,
- une étape de soustraction 28 de la surface de bruit globale, y compris dans la zone de défaut, pour la soustraire à l'image d'origine : on soustrait la composante correspondant au coefficient $a_{k,l}$ :

$$Res(t,t')=X(t,t')-a_{k,l} * h_{k,l}(t,t')$$

Cette image résiduelle Res(t,t') devient l'image X(t,t') à décomposer. On itère sur les quatre dernières étapes pour obtenir toutes les composantes du bruit de fond, en utilisant un test 29.

Le procédé de l'invention comprend ensuite :

- une étape 30 d'interprétation du défaut. L'image corrigée est alors squelettisée par un procédé classique qui fournit la direction et la taille du défaut. A partir de cette image corrigée, on peut accéder à la phase du signal, donc à la profondeur du défaut (représentation classique dans le plan d'impédance).

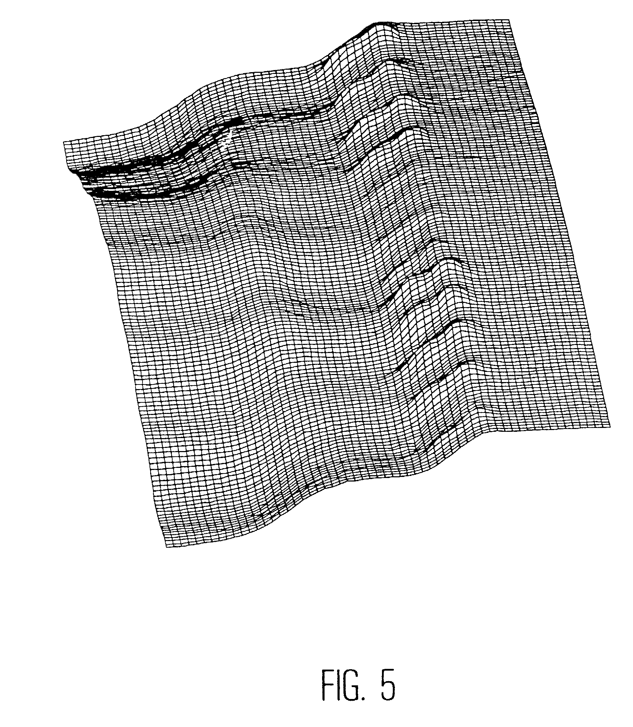

Un autre problème se pose lorsque les cartographies correspondent aux zones de transition de dudgeonnage 15 et 15' d'un tube, introduit par exemple dans une plaque entretoisée 16, comme représenté sur la figure 4. Elles présentent alors au moins une "marche" (ici deux marches correspondant aux deux zones 15 (ou 15') de dudgeonnage) dont le front est très raide. Dans ce cas, les fonctions sinusoïdales approchent très médiocrement l'image : elles ne permettent pas de supprimer l'effet du dudgeonnage.

Pour réaliser la suppression de la (ou des) marche(s) de dudgeonnage, on effectue le calcul du profil moyen selon l'axe longitudinal à partir d'une dizaine de lignes longitudinales de l'image.

Le procédé de l'invention comporte alors, après un test 31, plusieurs étapes successives :

- une étape 32 d'extraction de plusieurs lignes longitudinales de l'image,
- une étape 33 de génération d'une surface moyenne,
- une étape 34 de soustraction de cette surface à l'image d'origine.

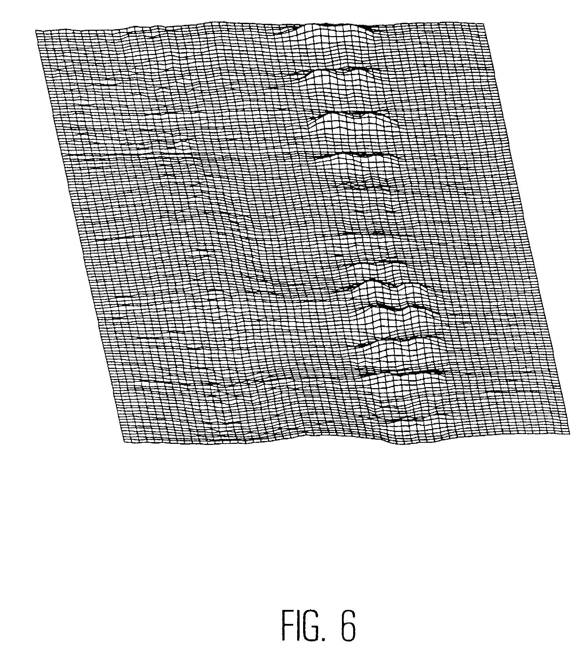

Le procédé de l'invention permet ainsi de passer d'une image telle que représentée sur la figure 5 à une image telle que représentée sur la figure 6.

En fin de procédé de l'invention, on réalise donc une interprétation du défaut (30). On obtient une information sur l'"architecture" du défaut : à savoir sa direction, sa dimension et sa profondeur. L'utilisation des outils de morphologie mathématique, sur les cartographies donne une information à propos des deux premiers paramètres : orientation et dimension. L'information concernant la profondeur ne peut être obtenue à partir des surfaces électromagnétiques présentées. On doit revenir au plan complexe et étudier les courbes de Lissajou obtenues à partir des lignes et colonnes extraites des cartographies (lignes X et Y). Le procédé de l'invention consiste à appliquer un algorithme de squelettisation à l'image. De tels algorithmes sont décrits notamment dans l'ouvrage intitulé "Morphological Methods in Image and Signal Processing" de Ch. R. Giardina et E.R. Dougherty (Prentice Hall).

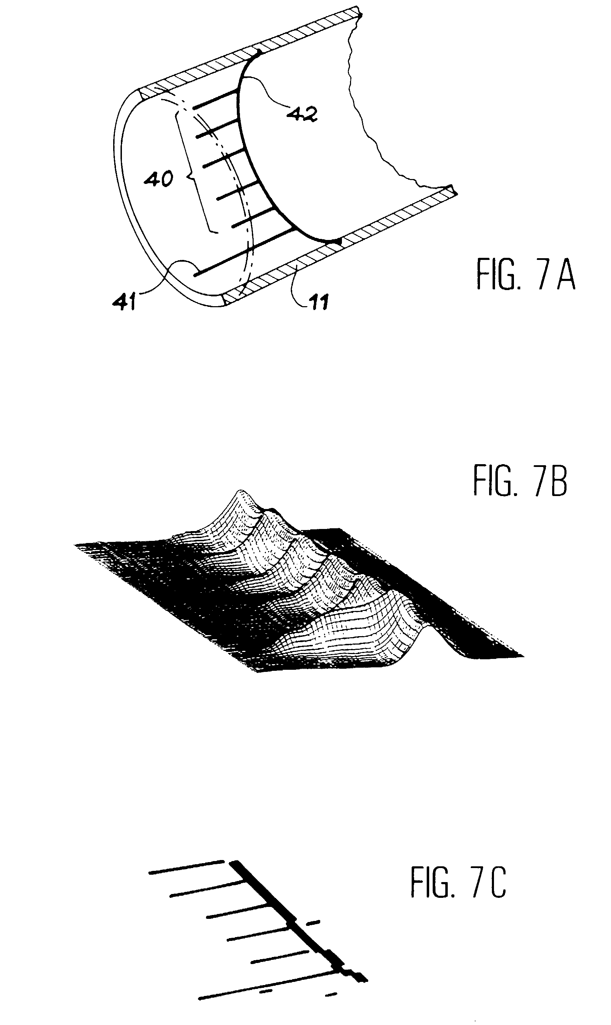

Ainsi, la figure 7A présente un réseau de six défauts longitudinaux, cinq étant des défauts 40 de longueur 6 mm et de profondeur 30 % et le sixième un défaut 41 de longueur 12 mm et de profondeur 60 %, couplé à un défaut circonférenciel 42 de profondeur 60 % disposé sur la surface interne du tube.

La figure 7B donne la cartographie originale.

La figure 7C donne le squelette de l'image.

Le procédé de l'invention permet ainsi de rebuter un tube avant utilisation ou de le reboucher après implantation dans un générateur de vapeur si le défaut mesuré a des caractéristiques (longueur, orientation, profondeur) dépassant certains seuils. Il en est ainsi :

- lorsque le défaut, orienté dans le sens circonférentiel, est étendu sur toute la circonférence,
- de même, lorsque le défaut est orienté dans le sens longitudinal si sa longueur dépasse huit ou neuf millimètres.

## Revendications

1. Procédé de traitement de signaux recueillis par un capteur ponctuel absolu (10) à courants de Foucault se déplaçant le long de la surface interne (12) d'un tube en matériau conducteur (11) et délivrant un signal représentatif de l'état de cette surface interne, ledit procédé comprenant une étape (22) de balayage de cette surface selon un ordre donné de zones de mesure élémentaires et d'enregistrement des valeurs échantillonnées du signal délivré par le capteur pour chacune de ces zones élémentaires, ce qui permet d'obtenir une image tridimensionnelle représentative de la surface, caractérisé en ce qu'il comprend également :

- une étape (21) de définition de surfaces élémentaires, chacune étant le produit de deux fonctions unidimensionnelle de base définies respectivement selon la direction longitudinale et selon la direction circonférentielle du tube,
- une étape (27) de construction d'une surface de bruit de fond sur l'ensemble de l'image à l'aide desdites surfaces élémentaires,
- une étape (28) de soustraction de cette surface de bruit de fond à l'image,
- une étape (30) d'interprétation d'un éventuel défaut.

2. Procédé selon la revendication 1, caractérise en ce que le capteur ponctuel absolu (10) comprend un bobinage ponctuel effectuant une mesure absolue.

3. Procédé selon la revendication 2, caractérisé en ce que ce bobinage a un mouvement hélicoïdal à l'intérieur du tube (11).

4. Procédé selon l'une quelconque des revendications 1 à 3, caractérisé en ce qu'il comprend :

- une étape (25, 26) de décomposition de l'image s'apparentant à une décomposition en série de Fourier afin de déterminer les composantes les plus représentatives d'un point de vue énergétique.

5. Procédé selon la revendication 1, caractérisé en ce que ces fonctions unidimensionnelles de base sont de type sinusoidal.

6. Procédé selon l'une quelconque des revendications précédentes, caractérisé en ce qu'on effectue une itération des étapes de décomposition de l'image (25), de construction de la surface de bruit de fond (27) et de soustraction de cette surface (28), jusqu'à élimination du bruit de fond.

7. Procédé selon l'une quelconque des revendications précédentes, caractérisé en ce qu'il comprend une étape préalable (23) de détection d'une fenêtre contenant un défaut, et en ce que dans l'étape (21) de définition des surfaces élémentaires on définit une première base de surfaces $g_{i,j}$ définies par morceaux sur le même domaine que l'image privée de la fenêtre de défaut, et une seconde base de surfaces $h_{i,j}$ définies sur tout le domaine de l'image.

8. Procédé selon la revendication 7, caractérisé en ce qu'après détection de la fenêtre de défaut, on effectue un prétraitement de dégauchissement (24) pour rendre équivalentes la première et la dernière colonnes de l'image.

9. Procédé selon la revendication 8, caractérisé en ce qu'on effectue la soustraction d'une droite joignant les points extrêmes de l'image.

10. Procédé selon l'une quelconque des revendications précédentes, caractérisé en ce qu'on effectue préalablement un prétraitement de dégauchissement, un prétraitement de suppression du signal de dudgeonnage.

11. procédé selon la revendication 9, caractérisé en ce que dans ce prétraitement de suppression du signal de dudgeonnage on extrait plusieurs lignes longitudinales de l'image en dehors de la fenêtre de défaut (32), on calcule la valeur moyenne, on génère la surface correspondante (33), et on soustrait cette surface de l'image (34).

**Patentansprüche**

1. Verfahren zur Verarbeitung von Signalen, aufgenommen von einer absoluten, punktuellen Wirbelstromsonde (10), die sich längs der Innenoberfläche (12) eines Rohrs aus leitendem Material (11) bewegt und ein Signal liefert, das repräsentativ ist für den Zustand dieser Innenoberfläche, wobei das genannte Verfahren einen Schritt (22) des Abtastens von elementaren Meßzonen dieser Oberfläche nach einer bestimmten Reihenfolge und des Aufzeichnens der abgetasteten Werte des durch die Sonde für jede der elementaren Meßzonen gelieferten Signals umfaßt, was ermöglicht, ein für die Oberfläche repräsentatives dreidimensionales Bild zu erstellen,
**dadurch gekennzeichnet,**
daß es auch umfaßt:

- einen Schritt (21) zum Definieren von Elementarflächen, wobei jede das Produkt von zwei eindimensionalen Basisfunktionen ist, jeweils definiert in der Längsrichtung und in der Umfangsrichtung des Rohres,

- einen Schritt (27) zum Herstellen einer Grundgeräusch-Oberfläche über das gesamte Bild mit Hilfe der genannten Elementarflächen,
- einen Schritt (28) zum Subtrahieren dieser Grundgeräusch-Oberfläche von dem Bild,
- einen Schritt (30) zum Auswerten bzw. Interpretieren eines eventuellen Fehlers.

2. Verfahren nach Anspruch 1, dadurch gekennzeichnet, daß die absolute punktuelle Sonde (10) eine punktuelle Wicklung umfaßt, die eine absolute Messung durchführt.

3. Verfahren nach Anspruch 2, dadurch gekennzeichnet, daß diese Wicklung im Innern des Rohrs (11) eine spiralförmige Bewegung hat.

4. Verfahren nach der Ansprüche 1 bis 3, dadurch gekennzeichnet, daß es umfaßt:

- einen Schritt (25, 26) zur Auflösung bzw. Zerlegung des Bildes, ähnlich einer Fourier-Serienauflösung, um die aus energetischer Sicht repräsentativsten Komponenten zu bestimmen.

5. Verfahren nach Anspruch 1, dadurch gekennzeichnet, daß diese eindimensionalen Basisfunktionen vom Sinustyp sind.

6. Verfahren nach der vorangehenden Ansprüche, dadurch gekennzeichnet, daß man eine Iteration der Auflösungs- bzw. Zerlegungsschritte des Bilds (25), des Herstellens der Grundgeräusch-Oberfläche (27) und des Subtrahierens dieser Oberfläche (28) durchführt, bis zur Eliminierung des Grundgeräusches.

7. Verfahren nach der vorangehenden Ansprüche, dadurch gekennzeichnet, daß es einen vorausgehenden Schritt (23) zum Detektieren eines einen Fehler enthaltenden Fensters umfaßt, und dadurch, daß man in dem Schritt (21) zum Definieren der Elementarflächen eine erste Basis von Flächen $g_{i,j}$ definiert, definiert durch Stücke in demselben Gebiet wie das durch das Fehlerfenster umschlossene Bild.

8. Verfahren nach Anspruch 7, dadurch gekennzeichnet, daß man nach Detektion des Fehlerfensters eine Zuricht-Vorbearbeitung (24) durchführt, um die erste und die letzte Spalte des Bildes äquivalent zu machen.

9. Verfahren nach Anspruch 8, dadurch gekennzeichnet, daß man die Subtraktion einer Geraden durchführt, die die extremen Punkte des Bildes verbindet.

10. Verfahren nach der vorangehenden Ansprüche, dadurch gekennzeichnet, daß man vorher eine Zuricht-Vorbearbeitung und eine Vorbearbeitung zur Unterdrückung des Walzsignals durchführt.

11. Verfahren nach Anspruch 9, dadurch gekennzeichnet, daß man bei dieser Vorbearbeitung zu Unterdrückung des Walzsignals dem Bild mehrere Längszeilen außerhalb des Fehlerfensters (32) entzieht, man den Mittelwert berechnet, man die entsprechende Fläche (33) erzeugt und man die Fläche von dem Bild (34) abzieht.

## Claims

1. Process for the processing of signals collected by an eddy current absolute point transducer (10) travelling along the inner surface (12) of a conductive material tube (11) and supplying a signal representing the state of said inner surface, said process having a stage (22) of scanning said surface in a given order of elementary measuring zones and recording sampled values of the signal supplied by the transducer for each of these zones, which makes it possible to obtain a three-dimensional image representative of the surface, characterized in that it also comprises a stage (21) of defining elementary surfaces, each being the product of two unidimensional base functions defined respectively in the longitudinal direction and the circumferential direction of the tube, a stage (27) of constructing a background noise surface on the complete image with the aid of said elementary surfaces, a stage (28) of subtracting said background surface from the image and a stage (30) of interpreting any fault.

2. Process according to claim 1, characterized in that the absolute point transducer (10) comprises a point coil performing an absolute measurement.

3. Process according to claim 2, characterized in that the coil performs a helical movement within the tube (11).

4. Process according to any one of the claims 1 to 3, characterized in that it comprises an elementary surface definition stage (21) and a stage (25, 26) of resolving the image related to a Fourier series resolution, in order to determine the most representative components from an energy standpoint.

5. Process according to claim 1, characterized in that the basic unidimensional functions are of the sinusoidal type.

6. Process according to any one of the preceding claims, characterized in that there is an iteration of the stages of resolving the image (25), constructing the background noise surface (27) and the subtraction of said surface (28) up to the elimination of the background noise.

7. Process according to any one of the preceding claims, characterized in that it comprises a prior stage (23) of detecting a window containing a fault and in that in the elementary surface definition stage (21) definition takes place of a first surface base $g_{i,j}$ defined by portions on the same zone as the image deprived of the fault window, and a second surface base $h_{i,j}$ defined on the entire zone of the image.

8. Process according to claim 7, characterized in that following the detection of the fault window, a truing preprocessing (24) takes place in order to render the first and final columns of the image equivalent.

9. Process according to claim 8, characterized in that subtraction takes place of a line joining the extreme points of the image.

10. Process according to any one of the preceding claims, characterized in that beforehand are performed a truing preprocessing and a tube expansion signal suppression preprocessing.

11. Process according to claim 9, characterized in that in said expansion signal suppression preprocessing extraction takes place of several longitudinal rows of the image outside the fault window (32), the average value is calculated, the corresponding surface (33) is generated and said surface is subtracted from the image (34).

FIG. 1

FIG. 2 A

FIG. 2B

FIG. 2C

FIG. 4

FIG. 3

20 → CHOIX DES FONCTIONS SINUSOIDALES UNIDIMENSIONNELLES

21 → DEFINITION DES SURFACES ELEMENTAIRES

22 → BALAYAGE DE LA SURFACE INTERNE DU TUBE ET ENREGISTREMENT DU SIGNAL DELIVRE PAR LA SONDE

23 → DETECTION D'UNE FENETRE CONTENANT UN DEFAUT

DUDGEONNAGE ?   31     OUI     NON

32 → EXTRACTION DE PLUSIEURS LIGNES DE L'IMAGE

33 → GENERATION D'UNE SURFACE MOYENNE

34 → SOUSTRACTION DE CETTE SURFACE A L'IMAGE

DEGAUCHISSEMENT — 24

CALCUL DE COEFFICIENTS $a_{i,j}$ SUR LE DOMAINE DE L'IMAGE PRIVEE DE LA FENETRE DE DEFAUT — 25

CHOIX DE COEFFICIENT MAXIMUM — 26

CONSTRUCTION DE LA SURFACE DE BRUIT DE FOND SUR TOUT LE DOMAINE DE L'IMAGE — 27

SOUSTRACTION DE LA SURFACE DE BRUIT DE FOND A L'IMAGE — 28

30 → INTERPRETATION DU DEFAUT

FIN DES ITERATIONS   29     NON     OUI

FIG. 5

FIG. 6

FIG. 7A

FIG. 7B

FIG. 7C